# EUROPÄISCHE PATENTSCHRIFT

(11) **EP 3 958 996 B1**
(45) Veröffentlichungstag und Bekanntmachung des Hinweises auf die Patenterteilung: **13.03.2024**
(21) Anmeldenummer: 20731056.6
(22) Anmeldetag: 05.06.2020
(51) Int. Cl.: B01D 29/23, B01D 35/027, B01D 35/30, B01D 35/153, B01D 35/147

(54) **FILTERVORRICHTUNG**
FILTER APPARATUS
DISPOSITIF DE FILTRATION

(30) Priorität: 25.07.2019 DE 102019005323; 25.07.2019 DE 102019005324; 25.07.2019 DE 102019005325; 25.07.2019 DE 102019005326
(43) Veröffentlichungstag der Anmeldung: 02.03.2022
(73) Patentinhaber: RT-Filtertechnik GmbH, 88048 Friedrichshafen (DE)
(72) Erfinder: STEHLE, Gerhard, 78467 Konstanz (DE); VAN UFFELEN, Florentin, 88079 Kressbronn a.B. (DE)
(74) Vertreter: Bartels und Partner, Patentanwälte
(86) Internationale Anmeldenummer: PCT/EP2020/065607
(87) Internationale Veröffentlichungsnummer: WO 2021/013417

(56) Entgegenhaltungen:
- DE-A1-102015 007 691
- DE-A1-102015 207 565
- DE-A1-102017 003 489
- DE-A1-102017 011 081
- US-B2- 8 349 180

## Beschreibung

Die Erfindung betrifft eine Filtervorrichtung mit den Merkmalen im Oberbegriff von Anspruch 1. Spezieller bezieht sich die Erfindung auf eine Rücklauf-Filtervorrichtung, die für einen Tankeinbau vorgesehen ist.

Filtervorrichtungen sind Stand der Technik, vgl. DE 10 2015 007 691 A1. Durch den platzsparenden Einbau in einen Hydrauliktank sind solche Filtervorrichtungen für den Einsatz bei kompakten hydraulisch angetriebenen Geräten geeignet, bei denen der zur Verfügung stehende Einbauraum klein ist. Der Tankeinbau ermöglicht auch eine einfache Bauweise des Filtergehäuses, gebildet aus einem am Flansch einer Tanköffnung abnehmbar anbringbaren Deckel und einem verhältnismäßig dünnwandigen Rohr, das sich im Abstand vom Filterelement vom Deckel ins Tankinnere bis zu eine Position erstreckt, die unter dem betrieblichen Fluidniveau liegt.

Die US 8 349 180 B2 beschreibt eine Filtervorrichtung mit den Merkmalen im Oberbegriff von Anspruch 1 mit einem Filtergehäuse, in dem ein austauschbares Filterelement aufgenommen ist, wobei das Filterelement eine Festlegeeinrichtung aufweist, die axial in eine Aufnahmeeinrichtung des Filtergehäuses einsetzbar ist, und wobei nach Durchführen einer rotatorischen Bewegung die Festlegeeinrichtung mit der Aufnahmeeinrichtung mittels Rastmitteln in einer Verrastungsstellung verrastet ist.

Weitere Filtervorrichtungen gehen aus der DE 10 2015 207 565 B4, der DE 10 2017 011 081 B4, der D4_DE 10 2017 003 489 A1 und der DE 10 2015 007 691 A1 hervor.

Ausgehend von diesem Stand der Technik stellt sich die Erfindung die Aufgabe, eine Filtervorrichtung der betrachteten Art zur Verfügung zu stellen, die sich bei Beibehalten der im Stand der Technik erreichten Vorteile durch ein besonders günstiges, sicheres Betriebsverhalten auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Festlegeeinrichtung entgegen der Kraft eines auf das Filterelement einwirkenden Energiespeichers in die Aufnahmeeinrichtung des Filtergehäuses einsetzbar ist. Der durch die Wirkung des Energiespeichers erzeugte Kraftschluss an den Anlageflächen bildet zusätzlich zu den Rastmitteln eine zusätzliche Sicherung gegen Verdrehen aus der Verrastungsstellung, so dass eine besonders sichere Positionsfestlegung des Filterelements in jedem Betriebszustand der Vorrichtung gewährleistet ist.

Es ist ferner vorgesehen, dass das Filterelement eine Festlegeeinrichtung aufweist, die axial in eine Aufnahmeeinrichtung des Filtergehäuses einsetzbar ist, dass nach Durchführen einer rotatorischen Bewegung die Festlegeeinrichtung mit der Aufnahmeeinrichtung mittels Rastmitteln in einer Verrastungsstellung verrastet ist. Vorzugsweise ist dabei vorgesehen, dass in der Verrastungsstellung unter Bildung einer Sperre, insbesondere gegen axiales Demontieren, paarweise einander zugeordnete Anlageflächen von Festlege- und Aufnahmeeinrichtung im Nicht-Betrieb der Vorrichtung miteinander in Anlage sind. Hierdurch ist jedenfalls im Nicht-Betrieb der Vorrichtung erreicht, dass unter Wirkung seiner Gewichtskraft das Filterelement in seiner Funktionsstellung im Filtergehäuse axial nach unten gesichert ist, wobei die radial wirkende Reibkraft zwischen den genannten Anlageflächen auch einem möglichen radialen Demontieren entgegenwirkt. Diese durch eine Drehbewegung in die Verrastungsstellung erreichte gegenseitige Anlage bildet durch formschlüssigen Eingriff die Sicherung von Festlege- und Aufnahmeeinrichtung gegen in Abheberichtung zumindest nach unten wirkende Axialkräfte. Die in der Verrastungsstellung wirksamen Rastmittel sichern Festlege- und Aufnahmeeinrichtung in der Drehposition des formschlüssigen Angriffs der Anlageflächen miteinander.

Bei einer bevorzugten Ausführungsform der erfindungsgemäßen Filtervorrichtung ist vorgesehen, dass mindestens ein weiteres Paar von Anlageflächen in Form einer Führungsfläche an der Festlegeeinrichtung und einer weiteren Führungsfläche an der Aufnahmeeinrichtung nunmehr im Betrieb der Vorrichtung unter dem dabei entstehenden Fluiddruck das Filterelement entgegen seiner Gewichtskraft durch Anlage der Führungsflächen aneinander sichert. Durch die dahingehende Flächenbegrenzung ist der Bewegung des Filterelementes im Betrieb der Vorrichtung auch axial nach oben begegnet, wobei wiederum die Reibung zwischen den genannten Flächen bewirkt, dass das Filterelement gegen ein ungewolltes radiales Demontieren gleichfalls gesichert ist. Insoweit ist dann die Anlage zwischen den vorstehend genannten Anlageflächen von Festlege- und Aufnahmeeinrichtung entlastet.

Mit Vorteil kann die Anordnung so getroffen sein, dass die Festlegeeinrichtung Bestandteil einer Endkappe des Filterelements ist, die von der Endkappe axial vorspringende Festlegestege aufweist, die die zuordenbaren Rastmittel sowie einen Teil der Anlageflächen aufweisen. Mit Vorteil kann hierbei die Aufnahmeeinrichtung Bestandteil eines ein Gehäuseteil des Tankeinbaufilters bildenden Deckels sein, der am Tankflansch einer Tanköffnung anbringbar ist.

Die Rastmittel können aus radial über die axiale Ausrichtung der Festlegestege vorspringende und rückfedernde Rasthaken gebildet sein, die in der Verrastungsstellung in Eingriff sind mit zuordenbaren Rastausnehmungen in der Aufnahmeeinrichtung, was geringe Betätigungskräfte erfordert.

Bei vorteilhaften Ausführungsbeispielen weist die Aufnahmeeinrichtung Führungsbahnen auf, die, einem vorgebbaren Krümmungsverlauf folgend, das axial in das Filtergehäuse eingesetzte Filterelement während seiner Rotationsbewegung bis zum Erreichen der Verrastungsstellung führen, so dass Fehlbedienungen ausgeschlossen sind.

Mit Vorteil kann die Anordnung hierbei so getroffen sein, dass die Führungsbahnen für einen Durchgriff eines jeweils zuordenbaren Rasthakens beim axialen Einsetzen des Filterelements jeweils eine Unterbrechung aufweisen, was eine Hilfe für den funktionssicheren Zusammenbau ist.

Zumindest ein Teil der Unterbrechungen kann hierbei eine Steuerfläche aufweisen, die den jeweiligen Rasthaken bei der Rotationsbewegung aus der Unterbrechung für sein weiteres Verfahren in die Verrastungsstellung herausheben, was gleichfalls den sinnfälligen Zusammenbau erleichtert.

Hierbei kann die Anordnung mit Vorteil so getroffen sein, dass bei fortgesetzter Rotationsbewegung nach Ausheben des jeweiligen Rasthakens aus der zugeordneten Unterbrechung der Rasthaken ein weiteres Führungsteil überfährt, das radial, von einer Kurvenbahnnach außen vorspringend, die Rasthaken in ihrer Verrastungsstellung mit abstützt. Dergestalt ist eine besonders sichere Verrastung erreicht.

Das weitere Führungsteil kann als Hohlkasten einstückig an die jeweilige Führungsbahn angeformt sein, wobei das Führungsteil mit einer weiteren, zusätzlichen Führungsfläche in einen axialen Abstand zwischen Rasthaken und Anlagefläche des Festlegesteges eingreift, was den Führungsvorgang bis zur Verrastung mit unterstützt und sicherstellt, dass das Element nicht ungewollt aus der Aufnahme in axialer Richtung herausfällt.

Bei vorteilhaften Ausführungsbeispielen greift bei abgeschlossener Rotationsbewegung in die Verrastungsstellung des Filterelements im zugehörigen Filtergehäuse der jeweilige Rasthaken in eine Ausnehmung in der Führungsbahn ein, die sich in der dieser Bewegung zugeordneten Rotationsrichtung an das jeweils weitere Führungsteil anschließt.

Bei besonders vorteilhaften Ausführungsbeispielen ist der Energiespeicher, als Druckfeder ausgebildet, Bestandteil eines Bypassventils, dessen Schließteil das Filterelement entgegengesetzt zu seiner axialen Einsetzbewegung vorspannt.

Nachstehend ist die Erfindung anhand eines in der Zeichnung dargestellten Ausführungsbeispiels im Einzelnen erläutert. Es zeigen:

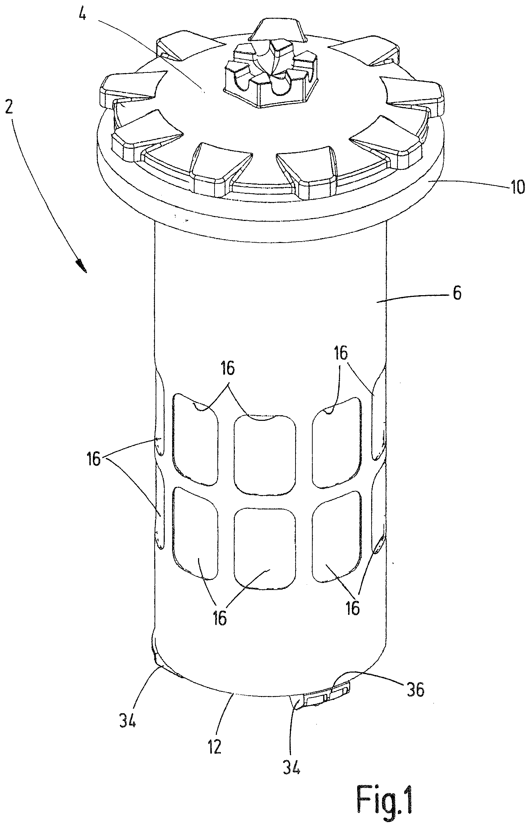

- Fig. 1: eine perspektivische Schrägansicht eines Ausführungsbeispiels der erfindungsgemäßen Filtervorrichtung;
- Fig. 2: eine in einer Vertikalebene aufgeschnitten gezeichnete perspektivische Schrägansicht des Ausführungsbeispiels;
- Fig. 3: eine perspektivische Schrägansicht des gesondert dargestellten Filterelements des Ausführungsbeispiels;
- Fig. 4: eine im Bereich des Deckels mit horizontaler Schnittebene aufgeschnittene perspektivische Schrägansicht des Ausführungsbeispiels, wobei zusammenwirkende Teile von Deckel und Filterelement in der Position bei einer ersten Stufe des Einsetzvorgangs gezeigt sind;
- Fig. 5 und 6: der Fig. 4 entsprechende Darstellungen, wobei die Positionen bei einer zweiten bzw. einer dritten Stufe des Einsetzvorganges gezeigt sind; und
- Fig. 7: eine in größerem Maßstab gezeichnete, mit vertikaler Schnittebene aufgeschnittene perspektivische Schrägansicht des an den Deckel anschließenden Teils des Ausführungsbeispiels.

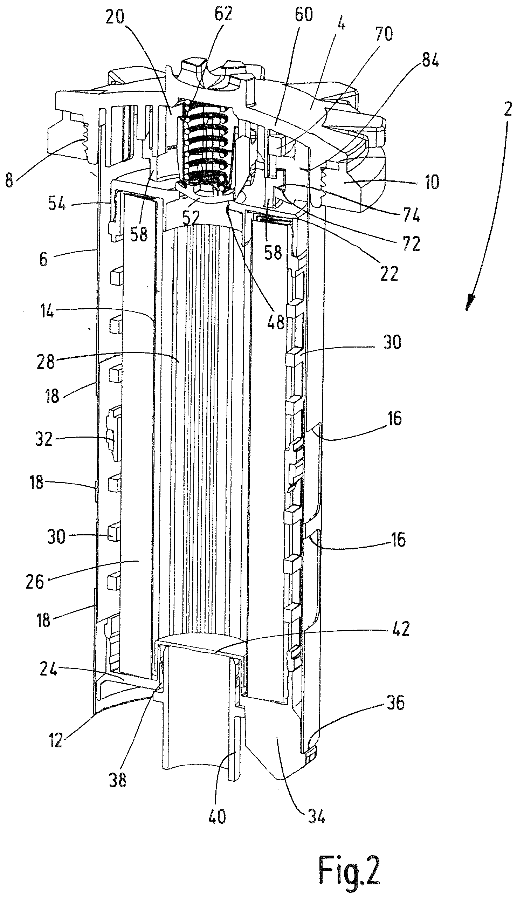

Unter Bezug auf die beigefügten Zeichnungen ist die Erfindung am Beispiel eines für den Einbau in einen (nicht gezeigten) Tank vorgesehenen Rücklauffilters erläutert. Das Ausführungsbeispiel weist ein als Ganzes mit 2 bezeichnetes Filtergehäuse auf, das aus einem Deckel 4 und einem Abströmrohr 6 gebildet ist. Der Deckel 4 weist ein Außengewinde 8 auf, mit dem er mit einem Tankflansch 10 verschraubbar ist, der sich an einer Tanköffnung des nicht dargestellten Tanks befindet. Das Abströmrohr 6 in Form eines dünnwandigen Hohlzylinders, liegt mit seinem oberen Ende an der Innenseite des Deckels 4 an. Dabei kann eine Befestigung am Deckel 4 vorgesehen sein, oder das Rohr 6 kann durch eine Abstützung vom unteren Ende 12 her am Deckel 4 gesichert sein. Das Abströmrohr 6, das ein in das Gehäuse 2 eingesetztes Filterelement 14 in einem radialen Abstand umgibt, weist für den Ausstrom von Filtrat Fenster 16 auf, die am Rohr 6 in solcher Höhe angeordnet sind, dass das Filtrat in einer solchen Höhe in den Tank ausströmt, die eine Entgasung auch bei geringem Tankvolumen begünstigt. Wie in Fig. 2 mit mehreren Überlappungsstellen 18 angedeutet, kann das Abströmrohr 6 aus mehreren Rohrsegmenten zusammengesetzt sein, mit denen sich Filtergehäuse 2 in gewünschten Längen realisieren lassen.

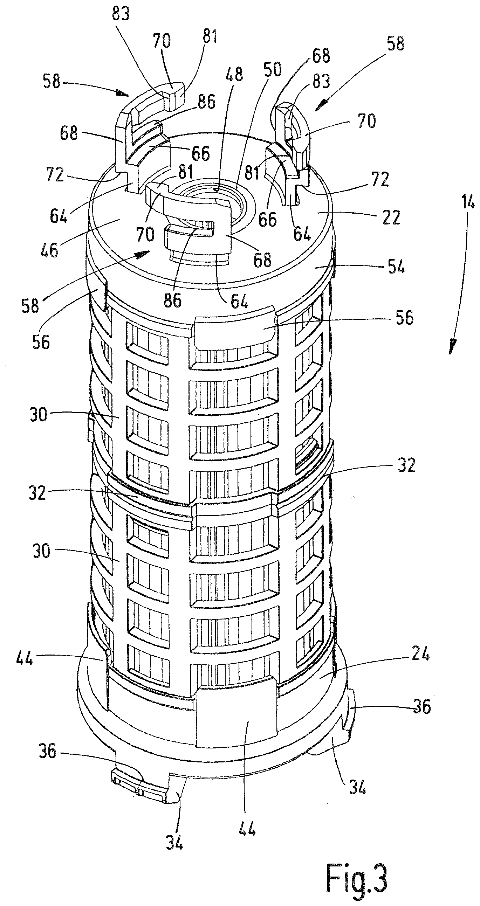

Mit seinem Innenraum 20, der die Form einer kreisrunden, flachen Schale besitzt, bildet der Deckel 4 die Aufnahmeeinrichtung für das Filterelement 14, das die Fig. 3 in gesonderter Darstellung zeigt. Das Filterelement 14 weist zwischen einer oberen Endkappe 22 und einer unteren Endkappe 24 ein hohlzylinderförmiges Filtermedium 26 auf, das innenseitig einen inneren Filterhohlraum 28 umgibt und an seiner Außenseite durch ein Stützrohr 30 abgestützt ist. Das aus einer Kunststoff-Gitterstruktur gebildete Stützrohr ist, ähnlich wie das Abströmrohr 6, aus Rohrsegmenten 30 zusammengesetzt, die an Verbindungsstellen 32 miteinander verbunden sind. Wie am deutlichsten Fig. 2 und 3 zeigen, weist die untere Endkappe 24 drei am Umfang verteilte Fußteile 34 auf, die axial nach unten und schräg nach außen auskragen. Mit ihrem Umfangsrand bilden die Fußteile 34 eine Anschlagfläche 36 zur Abstützung des unteren Endes 12 des Abströmrohres 6. Die untere Endkappe 24 bildet für den Filterbetrieb die Einströmkappe und weist eine zentrale Öffnung 38 auf, die von einem Rücklaufstutzen 40 durchgriffen ist, über den Unfiltrat zum inneren Filterhohlraum 28 gelangt. Das innere Ende des Stutzens 40 ist von einer bewegbaren Kappe 42 übergriffen, die ein Rückschlagventil bildet, das bei Wartungsarbeiten eine Rückverschmutzung in den Tank verhindert. Wandsegmente 44, die sich vom Umfangsbereich der unteren Endkappe 24 nach oben erstrecken, bilden Führungen für das untere Stützrohrsegment 30.

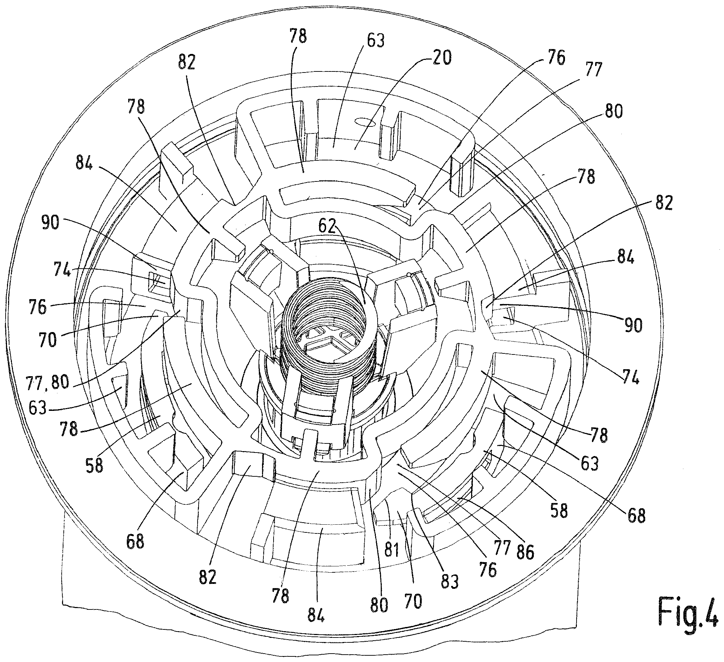

Die Oberseite der oberen Endkappe 22 ist durch eine ebenflächige Kreisscheibe 46 gebildet, die bis auf eine zentrale Öffnung 48 geschlossen ist, deren Rand 50 den Dichtsitz für den Schließkörper 52 eines Bypassventils bildet. Von dem die Einfassung für das Filtermedium 26 und das obere Stützrohrsegment 30 bildenden Umfangsrand 54 der Endkappe 22 erstrecken sich, in Entsprechung zu den Randsegmenten 44 an der unteren Endkappe 24, Randsegmente 56 (Fig. 3) nach unten, die die Führung für das obere Stützrohrsegment 30 bilden. Die obere Endkappe 22 weist eine Festlegeeinrichtung auf, die zum positionierten Halten des Filterelements 14 in der eingebauten Funktionsposition mit einer Aufnahmeeinrichtung zusammenwirkt, die sich im Innenraum 20 des Deckels 4 befindet. Die Festlegeeinrichtung ist durch drei Festlegestege 58 gebildet, die sich, s. Fig. 3, um 120° zueinander versetzt, in der Nähe des Umfangsrandes 54 von der Kreisscheibe 46 weg nach oben erstrecken. Die Aufnahmeeinrichtung weist für die Zusammenwirkung mit den Festlegestegen 58 Führungsbahnen und Führungsteile auf, die im Innenraum 20 des Deckels 4 einstückig an dessen Deckwand 60 angeformt sind, sich von dieser in Richtung auf das Filterelement 14 erstrecken und Führungsbahnen und Führungsteile bilden. Der Ablauf des Einbauvorgangs eines Filterelements 14 erfolgt in Stufen, wobei in einer ersten Stufe die Endkappe 22 in einer Axialbewegung in den Innenraum 20 eingesetzt wird. Das Einsetzen erfolgt bei er einer Drehposition des Filterelements 14, bei der die Festlegestege 58 auf je einen Einführraum 63 ausgerichtet ist, die sich als Freiräume im Innenraum 20 zueinander um 120° versetzt befinden. Das Filterelement 14 wird sodann in zwei weiteren Stufen bis zum Erreichen einer Verrastungsstellung gedreht. Bei dieser Drehbewegung sind die Festlegestege 58 durch Bogenteile 78 (Fig. 4 bis 6) und Führungsteile geführt. Die axiale Einsetzbewegung erfolgt gegen die Federkraft einer Druckfeder 62, die zwischen der Deckwand 60 und dem Schließkörper 52 des Bypassventils eingespannt ist und den Schließkörper 52 in die Schließstellung am den Dichtsitz bildenden Rand 50 der Öffnung 48 der Endkappe 22 drückt.

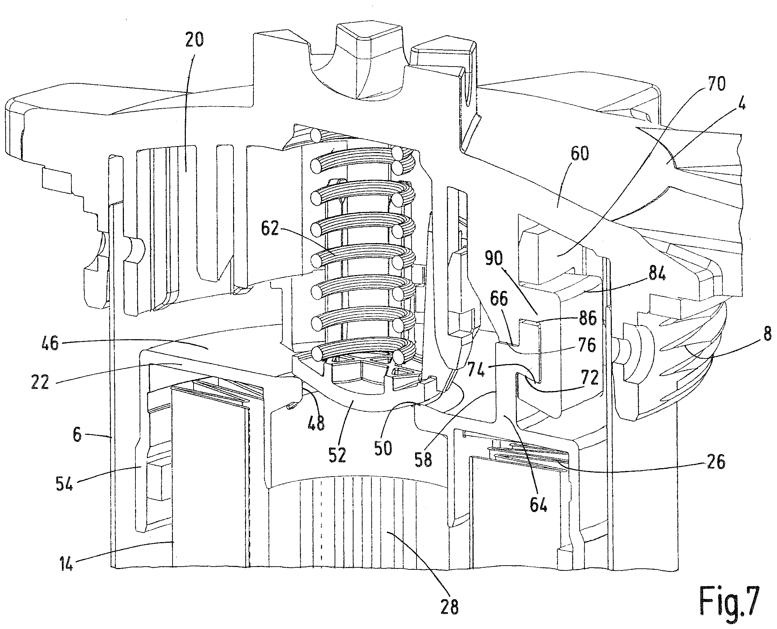

Die Festlegestege 58 weisen, wie Fig. 3 zeigt, anschließend an die Kreisscheibe 46 der Endkappe 22 einen Fuß 64 in Form eines Zylindermantelteils auf, dessen Oberseite durch eine Führungsfläche 66 begrenzt ist, die in einer Radialebene verläuft. Von einem Ende der Führungsfläche 66, und zu dieser radial nach außen versetzt, erstreckt sich von der Führungsfläche 66 ein Wandteil 68 in Axialrichtung nach oben und geht in einen Rasthaken 70 über, der sich unter Bildung eines axialen Zwischenraums entlang der Führungsfläche 66 und über deren Ende hinaus erstreckt. Mit der unterhalb der Führungsfläche 66 gelegenen Unterseite bildet das Wandteil 68 eine Anlagefläche 72, die bei der in Fig. 7 gezeigten Verrastungsstellung zusammen mit einer Anlagefläche 74 der Aufnahmeeinrichtung ein formschlüssig zusammenwirkendes Sperrflächenpaar bildet, das eine Bewegung des Filterelements 14 axial in Blickrichtung auf die Fig. 7 gesehen nach unten verhindert.

Ferner ist vorgesehen, dass mindestens ein weiteres Paar von Anlageflächen in Form der Führungsfläche 66 an der Festlegeeinrichtung 58 und einer weiteren Führungsfläche 76 an der Aufnahmeeinrichtung 20 vorhanden ist. Diese sorgen nunmehr, insbesondere im Betrieb der Vorrichtung unter dabei entstehendem Fluiddruck, das Filterelement 14 entgegen seiner Gewichtskraft durch Anlage der genannten Führungsflächen 66, 76 aneinander zu sichern. Durch die dahingehende Flächenbegrenzung ist der Bewegung des Filterelementes 14 im Betrieb der Vorrichtung auch axial, in Blickrichtung auf die Fig. 7 nach oben, begegnet. Eine entsprechende Reibung zwischen den genannten Flächenpaaren 72, 74; 66, 76 bewirkt, dass das Filterelement 14 innerhalb des Filtergehäuses 2 gegen ein ungewolltes radiales Demontieren gleichfalls gesichert ist.

Die Fig. 4 zeigt die Situation bei der ersten Stufe des Einbauvorgangs des Filterelements 14. In dieser Einsetz-Drehposition befinden sich die Rasthaken 70 im Bereich jeweils einer Unterbrechung 77 einer durch die Bogenteile 78 gebildeten Hauptführungsbahn, die bei der Drehbewegung die Führung der Rasthaken 70 bildet. Die Unterbrechungen 77 stellen im Innenraum 20 des Deckels 4 den Einführraum 63 als Freiraum für die axiale Einsetzbewegung der Festlegestege 58 mit den Rasthaken 70 zur Verfügung, so dass für die Einsetzbewegung als erste Stufe des Einbauvorgangs eine Drehposition vorgegeben ist. An den Unterbrechungen 77 bildet jeweils eine Steuerfläche 80 den Übergang zum nächsten Bogenteil 78, wobei die Steuerfläche 80 die Form einer radial nach außen schräg verlaufenden Rampe besitzt.

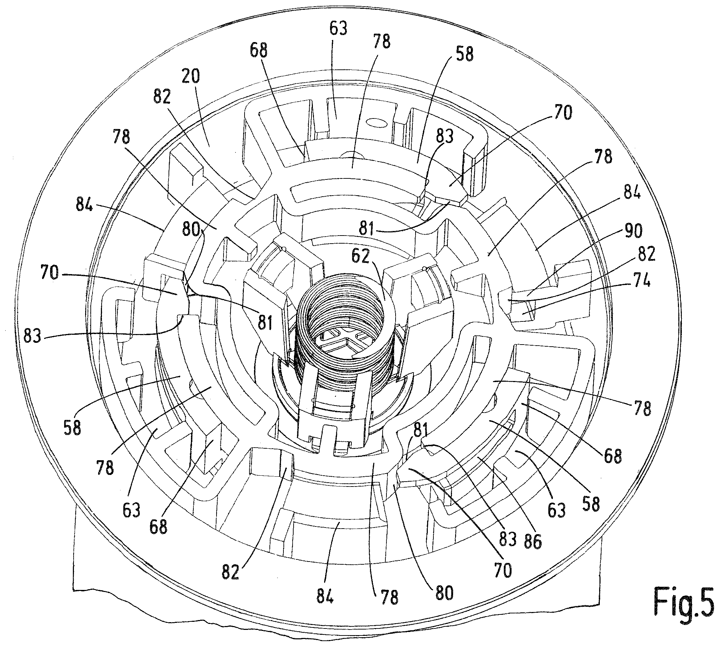

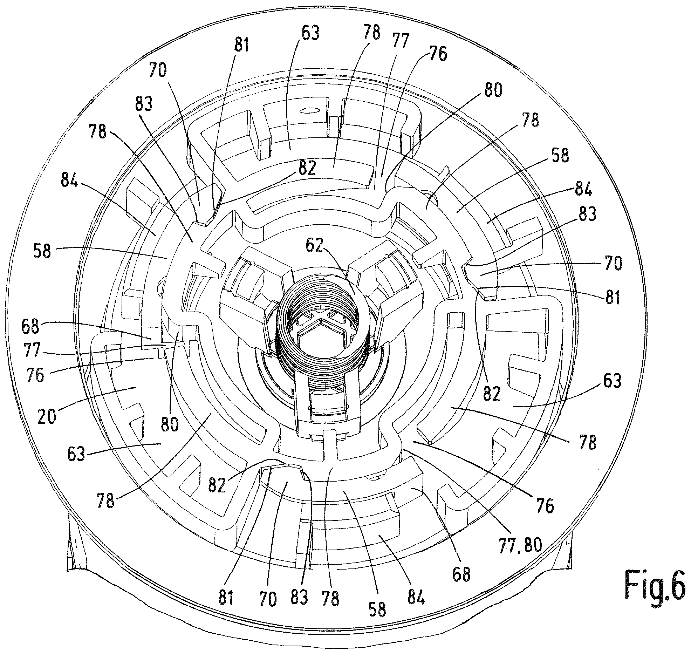

Bei der zweiten Stufe des Einbauvorgangs, bei der das Filterelement 14 gedreht wird, (bei Blickrichtung der Fig. 4 bis 6 im Uhrzeigersinn) laufen die Rasthaken 70 mit einer vorderen Steuerschräge 81 an der jeweiligen Steuerfläche 80 an und werden dadurch radial nach außen aus der Unterbrechung 77 ausgehoben. Die Fig. 5 zeigt die Drehposition, bei der die Rasthaken 70 hierfür mit der jeweiligen Steuerfläche 80 zusammenwirken. Bei weiterer Drehbewegung, als dritte Stufe des Einbauvorgangs, sind die Rasthaken 70 an der Außenseite des anschließenden Bogenteils 78 geführt, bis sie die in Fig. 6 gezeigte Verrastungsstellung erreichen, bei der die zurückfedernden Rasthaken 70 mit einer hinter der Steuerschräge 81 gebildeten Raste 83 in eine Rastausnehmung 82 eingreifen und so die Drehstellung in der Verrastungsstellung sichern. Bei der Bewegung zwischen den in Fig. 5 und 6 gezeigten Positionen, bei denen die Rasthaken 70 an der Außenseite des Bogenteils 78 bis zum Erreichen der Rastausnehmungen 82 geführt sind, überlaufen die Rasthaken 70 ein weiteres Führungsteil, das durch jeweils einen an die Deckwand 60 einstückig angeformten Block 84 gebildet ist, der eine Art Hohlkasten mit innerer Ausnehmung bildet, in der sich als axiale Begrenzungen des Hohlraums die äußere Anlagefläche 74 und ein oberer Führungskörper 90 befinden, siehe Fig. 7.

Bei Erreichen der Verrastungsstellung, Fig. 6, hat der Rasthaken 70 den Block 84 überlaufen. Gleichzeitig haben sich die vom Fuß 64 der Festlegestege 58 radial nach außen auskragenden Teile72 mit der Anlagefläche 74 und einer Führungsfläche 86, die im Abstand entlang des Rasthakens 70 verläuft, in den Hohlraum im Block 84 bewegt, so dass in der Verrastungsstellung der in Fig. 7 gezeigte formschlüssige Eingriff gebildet ist, bei dem die aneinanderliegenden Anlageflächen 72 und 74 die Sicherung gegen Axialkräfte nach unten die Flächen 66 und 76 die Sicherung gegen Axialkräfte nach oben und damit die Sperre gegen axiales Demontieren in beide Richtungen bilden. Durch die wirkende Federkraft der Druckfeder 62 des Bypassventils liegen die Anlageflächen 72, 74 bei der Verrastungsstellung auch kraftschlüssig aneinander, so dass, zusätzlich zum Rasteingriff der Rasthaken 70 mit den Ausnehmungen 82, eine weitere Sicherung gegen Verdrehen gebildet ist, die für den Ausbau des Filterelements 14 überwunden werden muss. Als Drehhilfe für den Ein- und Ausbau des Filterelements 14 stehen die von der unteren Endkappe 24 nach unten vorstehende Fußteile 34 zur Verfügung.

## Patentansprüche

1. Filtervorrichtung mit einem Filtergehäuse (2), in dem ein austauschbares Filterelement (14) aufgenommen ist, wobei das Filterelement (14) eine Festlegeeinrichtung (58) aufweist, die axial in eine Aufnahmeeinrichtung (20) des Filtergehäuses (2) einsetzbar ist, und wobei nach Durchführen einer rotatorischen Bewegung die Festlegeeinrichtung (58) mit der Aufnahmeeinrichtung (20) mittels Rastmitteln (70) in einer Verrastungsstellung verrastet ist, **dadurch gekennzeichnet, dass** die Festlegeeinrichtung (58) entgegen der Kraft eines auf das Filterelement (14) einwirkenden Energiespeichers (62) in die Aufnahmeeinrichtung (20) des Filtergehäuses (2) einsetzbar ist.

2. Filtervorrichtung nach Anspruch 1, **dadurch gekennzeichnet, dass** in der Verrastungsstellung unter Bildung einer Sperre, insbesondere gegen axiales Demontieren, Anlageflächen (72, 74) von Festlege- (58) und Aufnahmeeinrichtung (20) im Nicht-Betrieb der Vorrichtung miteinander in Anlage sind.

3. Filtervorrichtung nach Anspruch 1 oder 2, **dadurch gekennzeichnet, dass** mindestens ein weiteres Paar von Anlageflächen in Form einer Führungsfläche (66) an der Festlegeeinrichtung (58) und einer weiteren Führungsfläche (76) an der Aufnahmeeinrichtung (20) im Betrieb der Vorrichtung unter dem entstehenden Fluiddruck das Filterelement (14) entgegen seiner Gewichtskraft durch Anlage der Führungsflächen (66, 76) aneinander gesichert ist.

4. Filtervorrichtung nach Anspruch 1, **dadurch gekennzeichnet, dass** die Festlegeeinrichtung Bestandteil einer Endkappe (22) des Filterelements (14) ist, die von der Endkappe (22) axial vorspringende Festlegestege (58) aufweist, die die zuordenbaren Rastmittel (70) sowie einen Teil (72) der Anlageflächen (72, 74) aufweisen.

5. Filtervorrichtung nach Anspruch 1 oder 2, **dadurch gekennzeichnet, dass** die Rastmittel aus radial über die axiale Ausrichtung der Festlegestege (58) vorspringende und rückfedernde Rasthaken (70) gebildet sind, die in der Verrastungsstellung in Eingriff sind mit zuordenbaren Rastausnehmungen (82) in der Aufnahmeeinrichtung (20).

6. Filtervorrichtung nach einem der vorstehenden Ansprüche, **dadurch gekennzeichnet, dass** die Aufnahmeeinrichtung (20) Führungsbahnen (78) aufweist, die, einem vorgebbaren Krümmungsverlauf folgend, das axial in das Filtergehäuse (2) eingesetzte Filterelement (14) während seiner Rotationsbewegung bis zum Erreichen der Verrastungsstellung führen.

7. Filtervorrichtung nach Anspruch 6, **dadurch gekennzeichnet, dass** die Führungsbahnen (78) für einen Durchgriff eines jeweils zuordenbaren Rasthakens (70) beim axialen Einsetzen des Filterelements jeweils eine Unterbrechung (77) aufweisen.

8. Filtervorrichtung nach Anspruch 7, **dadurch gekennzeichnet, dass** zumindest ein Teil der Unterbrechungen (77) eine Steuerfläche (80) aufweisen, die den jeweiligen Rasthaken (70) bei der Rotationsbewegung sein weiteres Verfahren in die Verrastungsstellung bringen.

9. Filtervorrichtung nach Anspruch 7 oder 8, **dadurch gekennzeichnet, dass** bei fortgesetzter Rotationsbewegung nach Ausheben des jeweiligen Rasthakens (70) aus der zugeordneten Unterbrechung (77) der Rasthaken (70) ein weiteres Führungsteil (84) überfährt, das, radial von einer Kurvenbahn nach außen vorspringend, die Rasthaken (70) in ihrer Verrastungsstellung mit abstützt.

10. Filtervorrichtung nach Anspruch 9, **dadurch gekennzeichnet, dass** das Führungsteil (84) als Hohlkasten einstückig an die jeweilige Führungsbahn (78) angeformt ist und dass das Führungsteil (84) mit einer weiteren dritten Führungsfläche (90) in einen axialen Abstand zwischen Rasthaken (70) und Anlagefläche (72) des Festlegesteges (58) eingreift.

11. Filtervorrichtung nach einem der Ansprüche 6 bis 10, **dadurch gekennzeichnet, dass** bei abgeschlossener Rotationsbewegung in die Verrastungsstellung des Filterelements (14) im zugehörigen Filtergehäuse (2) der jeweilige Rasthaken (70) in eine Ausnehmung (82) in der Führungsbahn (78) eingreift, die sich in der dieser Bewegung zugeordneten Rotationsrichtung an das jeweilige Führungsteil (78) anschließt.

12. Filtervorrichtung nach einem der vorstehenden Ansprüche, **dadurch gekennzeichnet, dass** der Energiespeicher, als Druckfeder (62) ausgebildet, Bestandteil eines Bypassventils ist, dessen Schließteil (52) das Filterelement (14) entgegengesetzt zu seiner axialen Einsetzbewegung drückt.

## Claims

1. Filter device with a filter housing (2) in which a replaceable filter element (14) is received, wherein the filter element (14) comprises a fixing device (58), which can be inserted axially into a receiving device (20) of the filter housing (2), and wherein, after carrying out a rotation movement, the fixing device (58) is latched in a latching position with the receiving device (20) by latching means (70), **characterised in that** the fixing device (58) can be inserted in the receiving device (20) of the filter housing (2) against the force of an energy accumulator (62) acting on the filter element (14).

2. Filter device according to claim 1, **characterised in that**, in the latching position, forming a barrier, in particular against axial dismantling, contact surfaces (72, 74) of the fixing (58) and receiving device (20) are in contact with one another when the device is not in operation.

3. Filter device according to either claim 1 or claim 2, **characterised in that** at least one further pair of contact surfaces in the form of a guide surface (66) on the fixing device (58) and a further guide surface (76) on the receiving device (20) secures the filter element (14) against its gravitational force by placing the guide surfaces (66, 76) on top of one another during operation of the device under the fluid pressure arising.

4. Filter device according to claim 1, **characterised in that** the fixing device is part of an end cap (22) of the filter element (14), which comprises fixing webs (58) protruding axially from the end cap (22), which comprise the assignable latching means (70) and part (72) of the contact surfaces (72, 74).

5. Filter device according to either claim 1 or claim 2, **characterised in that** the latching means are formed by latching hooks (70) protruding radially and springing back over the axial orientation of the fixing webs (58), said hooks engaging with assignable latching recesses (82) in the receiving device (20) in the latching position.

6. Filter device according to any of the preceding claims, **characterised in that** the receiving device (20) comprises guide tracks (78), which, following a predefinable curved path, guide the filter element (14), which is inserted axially into the filter housing (2), during its rotation movement until the latching position is reached.

7. Filter device according to claim 6, **characterised in that** the guide tracks (78) each comprise an interruption (77) for penetration by an assignable latching hook (70) in each case during axial insertion of the filter element.

8. Filter device according to claim 7, **characterised in that** at least part of the interruptions (77) comprise a control surface (80) bringing the respective latching hook (70) into the latching position during the rotation movement (for) its further progression.

9. Filter device according to either claim 7 or claim 8, **characterised in that**, when the rotation movement continues after lifting the respective latching hook (70) out of the assigned interruption (77), the latching hook (70) passes over a further guide part (84), which, protruding radially outwards from a curved track, also supports the latching hooks (70) in their latching position.

10. Filter device according to claim 9, **characterised in that** the guide part (84) is integrally moulded onto the respective guide track (78) as a hollow box and **in that** the guide part (84) engages with a further third guide surface (90) in an axial spacing between the latching hook (70) and contact surface (72) of the fixing web (58).

11. Filter device according to any of claims 6 to 10, **characterised in that**, when the rotation movement into the latching position of the filter element (14) in the associated filter housing (2) is completed, the respective latching hook (70) engages in a recess (82) in the guide track (78), which is connected to the respective guide part (78) in the rotation direction assigned to this movement.

12. Filter device according to any of the preceding claims, **characterised in that** the energy accumulator, designed as a compression spring (62), is part of a bypass valve, the closing part (52) of which presses the filter element (14) in the opposite direction to its axial insertion movement.

## Revendications

1. Installation de filtration comprenant une enveloppe (2) de filtre, dans laquelle un élément (14) de filtre remplaçable est reçu, dans laquelle l'élément (14) de filtre a un dispositif (58) de fixation, qui peut être inséré axialement dans un dispositif (20) de réception de l'enveloppe (2) de filtre et dans laquelle, après avoir effectué un mouvement de rotation, le dispositif (58) de fixation s'encliquette en une position d'encliquetage avec le dispositif (20) de réception à l'aide de moyens (70) d'encliquetage, **caractérisée en ce que** le dispositif (58) de fixation peut, à l'encontre de la force d'un accumulateur (62) d'énergie agissant sur l'élément (14) de filtre, être inséré dans le dispositif (20) de réception de l'enveloppe (2) de filtre.

2. Installation de filtration suivant la revendication 1, **caractérisée en ce que** dans la position d'encliquetage avec formation d'un blocage, en particulier à l'encontre d'un démontage axial, des surfaces (72, 74) d'application du dispositif (58) de fixation et du dispositif (20) de réception sont, lorsque l'installation n'est pas en fonctionnement, en application l'une avec l'autre.

3. Installation de filtration suivant la revendication 1 ou 2, **caractérisée en ce qu'**au moins une autre paire de surfaces d'application sous la forme d'une surface (66) de guidage sur le dispositif (58) de fixation et d'une autre surface (76) de guidage sur le dispositif (20) de réception, alors que l'installation fonctionne, arrête, sous la pression de fluide qui se créée, l'élément (14) de filtre à l'encontre de son poids par application des surfaces (66, 76) de guidage l'une contre l'autre.

4. Installation de filtration suivant la revendication 1, **caractérisée en ce que** le dispositif de fixation est un constituant d'une coiffe (22) d'extrémité de l'élément (14) de filtre, qui a des entretoises (58) de fixation, qui sont en saillie axialement de la coiffe (22) d'extrémité et qui ont les moyens (70) d'encliquetage, pouvant être associés, ainsi qu'une partie (72) des surfaces (72, 74) d'application.

5. Installation de filtration suivant la revendication 1 ou 2, **caractérisée en ce que** les moyens d'encliquetage sont formés de crochet (70) d'encliquetage, qui font saillie radialement au-dessus de la direction axiale des entretoises (58) de fixation, qui rebondissent élastiquement et qui, dans la position d'encliquetage, sont en prise avec des évidements (82) d'encliquetage, pouvant être associés, du dispositif (20) de réception.

6. Installation de filtration suivant l'une des revendications précédentes, **caractérisée en ce que** le dispositif (20) de réception a des voies (78) de guidage, qui, en suivant un tracé incurvé pouvant être donné à l'avance, conduisent l'élément (14) de filtre, engagé axialement dans l'enveloppe (2) de filtre, pendant son mouvement de rotation jusqu'à atteindre la position d'encliquetage.

7. Installation de filtration suivant la revendication 6, **caractérisée en ce que** les voies (78) de guidage ont respectivement une interruption (77), pour le passage d'un crochet (70) d'encliquetage, pouvant être associé respectivement, lors de l'insertion axiale de l'élément de filtre.

8. Installation de filtration suivant la revendication 7, **caractérisée en ce qu'**au moins une partie des interruptions (77) ont une surface (80) de commande, qui met le crochet (70) d'encliquetage respectif, lors du mouvement de rotation, son autre déplacement dans la position d'encliquetage.

9. Installation de filtration suivant la revendication 7 ou 8, **caractérisée en ce que**, lors de la prolongation du mouvement de rotation, après que le crochet (70) d'encliquetage respectif s'est sorti de l'interruption (77) associée en s'en soulevant, le crochet (70) d'encliquetage parcourt une autre partie (84) de guidage qui, en saillie vers l'extérieur radialement d'une trajectoire, appuie le crochet (70) d'encliquetage dans sa position d'encliquetage.

10. Installation de filtration suivant la revendication 9, **caractérisée en ce que** la partie (84) de guidage est sous la forme d'un caisson creux d'une pièce avec la voie (78) de guidage respectif, et **en ce que** la partie (84) de guidage pénètre par une autre troisième surface (90) de guidage dans une distance axiale entre le crochet (70) d'encliquetage et la surface (72) d'application de l'entretoise (58) de fixation.

11. Installation de filtration suivant l'une des revendications 6 à 10, **caractérisée en ce que**, lorsque le mouvement de rotation est terminé, dans la position d'encliquetage de l'élément (14) de filtre dans l'enveloppe (2) de filtre associée, le crochet (70) d'encliquetage respectif pénètre dans un évidement (82) de la voie (78) de guidage, qui se raccorde à la partie (78) respective de guidage dans le sens de rotation associé à ce mouvement.

12. Installation de filtration suivant l'une des revendications précédentes, **caractérisée en ce que** l'accumulateur d'énergie, constitué sous la forme d'un ressort (62) de compression, fait partie d'une soupape de dérivation, dont l'obturateur (52) pousse l'élément (14) de filtre dans le sens contraire à son mouvement d'insertion axiale.
